# EUROPÄISCHE PATENTANMELDUNG

(11) **EP 1 690 653 A1**
(43) Veröffentlichungstag der Anmeldung: **16.08.2006**
(21) Anmeldenummer: 05002630.1
(22) Anmeldetag: 09.02.2005
(51) Int. Cl.: B25J 19/00

(54) **Roboter, insbesondere Gelenkarmroboter, mit Kondensator**

(71) Anmelder: VisiCon Automatisierungstechnik GmbH, 37130 Gleichen-Wöllmarshausen (DE)
(72) Erfinder: Brunk, Wolfgang, 37130 Gleichen-Wöllmarshausen (DE)
(74) Vertreter: Rehberg Hüppe + Partner

(57) **Zusammenfassung**

Ein Roboter (1), insbesondere ein Gelenkrahmenroboter, weist eine an einer Basis (4) gelagerte bewegliche Struktur (2) und einen an der beweglichen Struktur (2) gelagerten Kopf (3) auf. Der Kopf (3) weist eine mit elektrischer Energie zu versorgende Einrichtung auf und ist unter Relativbewegung von Teilen der beweglichen Struktur (2) motorisch gegenüber der Basis (4) verfahrbar. Dabei weist der Kopf (3) mindestens einen Kondensator (23) auf, der die Einrichtung mit elektrischer Energie versorgt.

## Beschreibung

Die Erfindung betrifft einen Roboter, insbesondere einen Gelenkarmroboter mit den Merkmalen des Patentanspruchs 1.

### STAND DER TECHNIK

Bekannte Roboter verfügen zum Verfahren eines Kopfes gegenüber einer Basis über eine bewegliche Struktur mit im Allgemeinen mindestens fünf Achsen. Bei Gelenkarmrobotern sind diese Achsen rotatorisch ausgelegt, es ist ihnen also jeweils ein Drehgelenk zugeordnet. Der Drehwinkel solcher Drehgelenke beträgt bei den Grundachsen eines Gelenkarmroboters, also den Achsen, die näher zur Basis angeordnet sind, typischerweise zwischen 30° und 355°. Bei höheren Achsen, insbesondere des Drehgelenks, über das der Kopf an der beweglichen Struktur gelagert ist, d. h. der so genannten Handachse, sind auch Drehwinkel von deutlich größer als 360° bekannt. Wenn auf einer solchen Achse eine Einrichtung angeordnet wird, die auf elektrische Verbindungen zur lnformations- und Energieübertragung angewiesen ist, lässt sich diese ohne Einschränkung der Drehbewegung nur mit elektrischen Schleifkontakten und Schleifringen herstellen. Auch aus einer flexiblen Kabelverbindung resultiert hingegen eine erhebliche Beschränkung der Drehbewegung. Entsprechende Probleme treten bei allen anderen Drehgelenken oder auch Linearführungen eines Roboters auf, insbesondere wenn die elektrischen Verbindungen zur Informations- und Energieübertragung zur letzten Achse des Roboters nachträglich, d.h. nach dem Bau des Roboters, bereitgestellt werden müssen. Wegen des damit verbundenen besonders großen Aufwands ist es nachträglich oft praktisch unmöglich, entsprechende Leitungen innerhalb des Roboters zu verlegen. Bei einer Verlegung außerhalb des Roboters sind die Leitungen exponiert und werden daher leicht beschädigt bzw. schränken die Bewegungsmöglichkeiten des Roboters nicht unerheblich ein. In jedem Fall muss mit zusätzlichem Aufwand für die Wartung bzw. den regelmäßigen Austausch der die Leitungen realisierenden Kabel gerechnet werden, wenn ein Kabelbruch vermieden werden soll.

### AUFGABE DER ERFINDUNG

Der Erfindung liegt die Aufgabe zugrunde, einen Roboter, insbesondere einen Gelenkarmroboter mit den Merkmalen des Oberbegriffs des Patentanspruchs 1 aufzuzeigen, bei dem die Probleme mit einer Kabelverlegung längs der beweglichen Struktur zur Versorgung einer Einrichtung am Kopf des Roboters mit elektrischer Energie möglichst vollständig vermieden werden, ohne hierfür besonders hohe Kosten aufzuwenden.

### LÖSUNG

Die Aufgabe der Erfindung wird durch einen Roboter mit den Merkmalen des Patentanspruchs 1 gelöst.

Vorteilhafte Ausgestaltungen des neuen Roboters sind in den Unteransprüchen 2 bis 10 beschrieben.

### BESCHREIBUNG DER ERFINDUNG

Bei dem neuen Roboter weist der Kopf mindestens einen Kondensator auf, der die an ihm vorgesehene Einrichtung mit elektrischer Energie versorgt. D. h., an dem Kopf ist ein Energiespeicher für elektrische Energie in Form eines Kondensators vorgesehen. Ein Kondensator hat gegenüber herkömmlichen Akkumulatoren zur Energiespeicherung den großen Vorteil, dass bei ihm kein Memoryeffekt auftritt, d. h., dass sich seine Ladeeigenschaften und insbesondere die Menge der aufnehmbaren und wieder abgebbaren elektrischen Energie über die Dauer seiner Verwendung nicht relevant ändern. Zudem kann ein Kondensator bei Anlegung großer Ladeströme viel schneller wieder aufgeladen werden, als dies bei einem herkömmlichen Akkumulator der Fall ist. Dabei ist die in einem Kondensator speicherbare Energiemenge für viele elektrische Einrichtungen, die am Kopf eines Roboters vorgesehen werden, völlig ausreichend. So stehen heute bereits so genannte "Ultra-Caps" zur Verfügung, bei denen es sich um Kondensatoren handelt und die z. B. in den Abmessungen einer handelsüblichen Monozelle und bei einem Gewicht von 60 g eine Kapazität von 350 F bei 2,5 V bereitstellen. Vier solcher Kondensatoren in Reihe geschaltet, bilden eine Gesamtkapazität von 350 : 4 = 87,5 F aus. Aufgeladen auf 10 V und entladen bis auf 2,5 V können aus diesen Kondensatoren mehr als 4000 Ws entnommen werden. So kann beispielsweise ein 100 W Motor ca. 40 Sekunden lang betrieben werden.

Um die in den Kondensator gespeicherte elektrische Energie möglichst vollständig für den Betrieb der mit ihr zu versorgenden Einrichtung nutzen zu können, ist es bevorzugt, wenn dem Kondensator eine getaktete Regelung nachgeschaltet ist, d. h. die Energieabgabe aus dem Kondensator über eine getaktete Regelung erfolgt. Eine solche getaktete Regelung regelt die interessierenden Größen der der Einrichtung zur Verfügung gestellten elektrischen Energie, insbesondere deren Spannung, durch eine Veränderung der Pulsbreite, über die dem Kondensator die elektrische Energie entnommen wird. So wird keine elektrische Energie in irgendwelchen Regelwiderständen vernichtet.

Zum Wiederaufladen des Kondensators des neuen Roboters kann beispielsweise an seiner Basis eine Aufladestation vorgesehen sein, in die heran der Kopf so in eine Aufladeposition verfahrbar ist, dass elektrische Energie in den Kondensator überführbar ist. Konkret können in der Aufladeposition elektrische Kontakte zwischen dem Kondensator und einer Spannungsquelle der Aufladestation geschlossen werden.

Besonders bevorzugt ist es, wenn eine Steuerung den Kopf des Roboters zyklisch in die Aufladeposition verfährt. Die meisten Roboter führen in ihrer Verwendung ein zyklisches Arbeitsprogramm aus. Dabei starten sie aus einer Ruheposition und kehren am Ende jedes Arbeitszyklus in die die Ruheposition zurück. Bei den neuen Robotern befindet sich der Kopf in seiner Ruheposition vorzugsweise in der Aufladeposition an der Aufladestation.

Bei den neuen Robotern sind vorzugsweise keinerlei Drahtverbindungen zwischen der Einrichtung am Kopf und der Basis vorgesehen. Zum Empfangen von Steuersignalen weist die Einrichtung daher vorzugsweise einen Empfänger zum Empfangen drahtloser Steuersignale auf.

Ebenso kann die Einrichtung auch einen Sender zum Senden drahtloser Signale aufweisen, um beispielsweise eine Steuerung der Einrichtung in einer geschlossenen Schleife zu ermöglichen oder Messsignale zurückzuführen.

In einer konkreten Ausführungsform kann die Einrichtung eine standardisierte Schnittstelle für eine drahtlose Datenübertragung aufweisen. Derartige Schnittstellen sind im Stand der Technik unter der Bezeichnung BlueTooth, ZigBee, WirelessUSB usw. zu künstigen Kosten handelsüblich verfügbar. Diese Technologien zeichnen sich neben hoher Störsicherheit und großer Zuverlässigkeit auch durch einen sehr geringen Energieverbrauch (10 bis 50 mA bei 3 V im aktiven Modus) aus. Eine Energieversorgung derartiger elektronischer Bausteine aus Kondensatoren ist daher problemlos möglich. Neben den voranstehend genannten Schnittstellen sind beispielsweise auch Infrarotschnittstellen, wie sie ebenfalls in standardisierter Ausführung erhältlich sind, zur Realisation der drahtlosen Datenübertragung bei dem neuen Roboter geeignet.

Die mit elektrischer Energie zu versorgende Einrichtung kann beispielsweise ein elektrisch angetriebenes Werkzeug, einen elektrisch betriebenen Aktuator und/oder einen elektrischen oder elektronischen Sensor umfassen. Bei dem Werkzeug kann es sich um ein Bearbeitungswerkzeug handeln. Der Aktuator kann zum Einstellen einer von dem Roboter manipulierten Vorrichtung dienen. Mit dem Sensor können beispielsweise physikalische Größen erfasst werden.

Insbesondere ist der neue Roboter ein Gelenkarmroboter, bei dem die bewegliche Struktur mehrere motorisch angesteuerte Gelenke aufweist. Ganz besonders Vorteile bietet er dann, wenn der Kopf über ein Drehgelenk mit einem Drehwinkel größer als 360° an der Struktur oder über die Struktur an der Basis gelagert ist.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung ist ebenfalls möglich und wird hiermit angeregt. Dies betrifft auch solche Merkmale, die in separaten Zeichnungsfiguren dargestellt sind oder bei deren Beschreibung genannt werden.

Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.

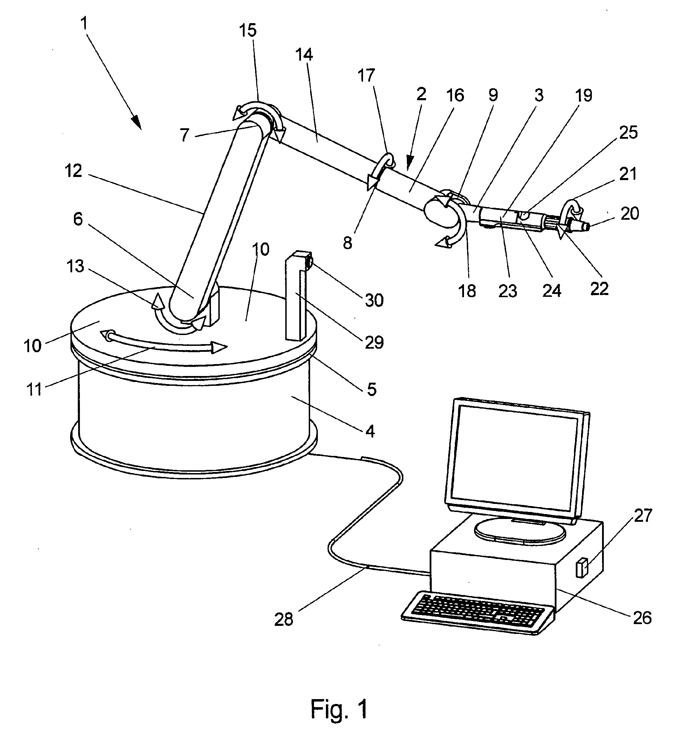

- **Fig. 1**: zeigt einen Gelenkarmroboter mit fünf Achsen, dessen Kopf einen Rotationsaktuator aufweist.

### FIGURENBESCHREIBUNG

**Fig. 1** zeigt einen Gelenkarmrobotor 1 mit einer motorisch ansteuerbaren, beweglichen Struktur 2, mit der ein Kopf 3 gegenüber einer Basis 4 des Gelenkarmroboters 1 im Raum definiert verfahrbar ist. Die bewegliche Struktur 2 weist fünf Drehgelenke 5 bis 9 auf. Das Drehgelenk 5 zwischen der Basis 4 und einer Grundplatte 10 definiert eine erste rotatorische Achse, deren Bewegungsfreiheitsgrad durch einen Doppelpfeil 11 angedeutet ist. Das Drehgelenk 6 zwischen der Platte 10 und einem Arm 12 definiert eine zweite rotatorische Achse, deren Bewegungsfreiheitsgrad durch einen Doppelpfeil 13 angedeutet ist. Das Drehgelenk 7 zwischen dem Arm 12 und einem weiteren Arm 14 der Struktur 2 definiert eine weitere rotatorische Achse, deren Freiheitsgrad durch einen Doppelpfeil 15 angedeutet ist. Das Drehgelenk 8 zwischen dem Arm 14 und einem weiteren Arm 16 definiert eine weitere rotatorische Achse, deren Drehfreiheitsgrad durch einen Doppelpfeil 17 angedeutet ist. Das Drehgelenk 9 definiert eine rotatorische Achse zwischen dem Arm 16 und dem Kopf 3, dessen Freiheitsgrad durch einen Doppelpfeil 18 angedeutet ist. Die Achsen, deren Freiheitsgrade durch die Doppelpfeile 13, 15 und 18 angedeutet sind, verlaufen im Wesentlichen senkrecht zu den über das jeweilige Drehgelenk 6, 7 bzw. 9 miteinander verbundenen Bauteilen, während die Achsen, deren Freiheitsgrade durch die Doppelpfeile 11 und 17 angedeutet sind, im Wesentlichen in Richtung der über das jeweilige Drehgelenk 5 bzw. 8 miteinander verbundenen Bauteilen verlaufen. Durch motorische Ansteuerung der Drehgelenke 6 bis 9 kann der Kopf 3 des Roboters 1 im Raum nicht nur definiert positioniert sondern auch ausgerichtet werden, um einen Aktuator 19 an den Kopf 3 in eine gewünschte Arbeitsposition zu bringen. Der Aktuator 19 ist hier ein Rotationsaktuator, dessen distales Ende 20, welches mit einem Werkzeug versehen sein kann, in Richtung eines Doppelpfeils 21 kontrolliert gegenüber dem restlichen Kopf 3 mit einem elektrischen Antrieb 22 verdrehbar ist. Die Energieversorgung für den elektrischen Antrieb 22 besteht aus einem Kondensator 23, der auch aus mehreren einzelnen Kondensatoren durch Reihen- und/oder Parallelschaltung zusammengesetzt sein kann, und einer getakteten Regelung 24, um dem Antrieb 22 die in dem Kondensator 23 gespeicherte elektrische Energie geregelt und ohne Energieverlust in Regelwiderständen zur Verfügung zu stellen. Die Ansteuerung der Regelung 24 mit Steuerbefehlen von Außen erfolgt dabei für eine Schnittstelle 25 für eine drahtlose Datenübertragung von einer externen Steuerung aus, die hier in Form eines Rechners 26 angedeutet ist, und an der eine komplementäre Schnittstelle 27 vorgesehen ist. Bei dem Rechner 26 kann es sich um denselben Rechner handeln, der auch zur Steuerung des restlichen Roboters 1 dient und hierzu mit diesem über eine oder mehrere Steuerleitungen 28 verbunden ist. Der Kondensator 23 ist so ausgelegt, dass er für einen üblichen Arbeitszyklus des Roboters 1 ausreichend viel elektrische Energie für den Betrieb des Aktuators 19 zur Verfügung stellt. Zum Wiederaufladen des Kondensators 23 ist hier an der basisnahen Platte 10 eine Aufladestation 29 vorgesehen. Am Ende jedes Arbeitszyklus des Roboters 1 wird der Kopf 3 so in eine Aufladeposition an der Ladestation 29 verfahren, dass sein Kondensator 23 über elektrische Kontakte 30 von einer hier nicht dargestellten Spannungsquelle der Ladestation 29 wieder aufgeladen wird. Dies ist bei größeren Strömen in sehr kurzer Zeit möglich, so dass der Kondensator 23 sehr kurzfristig wieder für einen weiteren Arbeitszyklus des Roboters 1 zur Verfügung steht. Der Kopf 23 ist zur Versorgung des elektrischen Antriebs 22 des Aktuators 19 mit elektrischer Energie und auch zur Steuerung der Bewegung des Aktuators 19 nicht mit der Basis 4 oder dem Rechner 26 verkabelt. Er tritt nur temporär mit der Aufladestation 29 in elektrischen Kontakt und steht ansonsten drahtlos über die Schnittstellen 25 und 27 mit dem Rechner 26 in Verbindung. So kann insbesondere ein vorhandener Roboter 1 mit neuen elektrisch zu versorgenden Einreichungen an seinem Kopf 3 versehen werden, ohne dass hierfür Kabel zur Versorgung mit elektrischen Energie- oder Ansteuerungen längs der Arme 12, 14 und 16 verlegt werden müssen.

### BEZUGSZEICHENLISTE

- 1: Roboter
- 2: bewegliche Struktur
- 3: Kopf
- 4: Basis
- 5: Drehgelenk
- 6: Drehgelenk
- 7: Drehgelenk
- 8: Drehgelenk
- 9: Drehgelenk
- 10: Platte
- 11: Doppelpfeil
- 12: Arm
- 13: Doppelpfeil
- 14: Arm
- 15: Doppelpfeil
- 16: Arm
- 17: Doppelpfeil
- 18: Doppelpfeil
- 19: Aktuator
- 20: distales Endes
- 21: Doppelpfeil
- 22: elektrischer Antrieb
- 23: Kondensator
- 24: getaktete Regelung
- 25: Schnittstelle
- 26: Rechner
- 27: Schnittstelle
- 28: Steuerleitung
- 29: Aufladestation
- 30: elektrischer Kontakt

## Patentansprüche

1. Roboter, insbesondere Gelenkarmroboter, mit einer an einer Basis gelagerten beweglichen Struktur und einem an der beweglichen Struktur gelagerten Kopf, wobei der Kopf eine mit elektrischer Energie zu versorgende Einrichtung aufweist und unter Relativbewegung von Teilen der beweglichen Struktur motorisch gegenüber der Basis verfahrbar ist, **dadurch gekennzeichnet, dass** der Kopf (3) mindestens einen Kondensator (23) aufweist, der die Einrichtung mit elektrischer Energie versorgt.

2. Roboter nach Anspruch 1, **dadurch gekennzeichnet, dass** an dem Kopf (3) eine getaktete Regelung (24) für die Entnahme von elektrischer Energie aus dem Kondensator (23) vorgesehen ist.

3. Roboter nach Anspruch 1 oder 2, **dadurch gekennzeichnet, dass** eine Aufladestation (29) für den Kondensator (23) vorgesehen ist, wobei der Kopf (3) in eine Aufladeposition an der Aufladestation (29) verfahrbar ist, in der elektrische Energie in den Kondensator (23) überführbar ist.

4. Roboter nach Anspruch 3, **dadurch gekennzeichnet, dass** eine Steuerung den Kopf (3) zyklisch in die Aufladeposition verfährt.

5. Roboter nach einem der Ansprüche 1 bis 4, **dadurch gekennzeichnet, dass** die Einrichtung einen Empfänger zum Empfangen drahtloser Steuersignale aufweist.

6. Roboter nach einem der Ansprüche 1 bis 5, **dadurch gekennzeichnet, dass** die Einrichtung einen Sender zum Senden drahtloser Signale aufweist

7. Roboter nach Anspruch 5 und 6, **dadurch gekennzeichnet, dass** die Einrichtung eine standardisierte Schnittstelle (25) für eine drahtlose Datenübertragung aufweist.

8. Roboter nach einem der Ansprüche 1 bis 7, **dadurch gekennzeichnet, dass** die Einrichtung ein elektrisch angetriebenes Werkzeug, einen elektrisch betriebenen Aktuator (19) und/oder einen elektrischen oder elektronischen Sensor umfasst.

9. Roboter nach einem der Ansprüche 1 bis 8, **dadurch gekennzeichnet, dass** die bewegliche Struktur (2) mehrere motorisch ansteuerbare Drehgelenke (5 - 9) aufweist.

10. Roboter nach einem der Ansprüche 1 bis 9, **dadurch gekennzeichnet, dass** der Kopf (3) über ein Drehgelenk (8) mit einem Drehwinkel größer als 360° an der Basis (4) gelagert ist.
